# EUROPEAN PATENT APPLICATION

(11) **EP 4 704 303 A1**
(43) Date of publication of application: **04.03.2026**
(21) Application number: 24796546.0
(22) Date of filing: 26.02.2024
(51) Int. Cl.: H02J 50/40, H02J 50/20, H02J 50/80

(54) **WIRELESS POWER SUPPLY SYSTEM, SYSTEM, AND TRANSMITTER**

(30) Priority: 26.04.2023 JP 2023072104
(71) Applicant: Aeterlink Corp., Tokyo 100-0005 (JP)
(72) Inventor: KODATE Naoto, Tokyo 100-0005 (JP)
(74) Representative: Zimmermann & Partner Patentanwälte mbB
(86) International application number: PCT/JP2024/006715
(87) International publication number: WO 2024/224787

(57) **Abstract**

This wireless power supply system is constituted by a plurality of transmitters, a plurality of receivers, and a control device capable of controlling the plurality of transmitters. The plurality of transmitters can wirelessly supply power to the plurality of receivers. The control device can perform control so that the plurality of transmitters do not transmit radio waves over a second period for each first period. In the second period, the control device executes carrier sense control in a space in which the plurality of transmitters and the plurality of receivers are arranged.

## Description

### TECHNICAL FIELD

The present disclosure relates to a wireless power supply system, a system, and a transmitter.

### BACKGROUND ART

A technology for wirelessly transmitting power is known.

Patent Literature 1 discloses an electronic device and a method capable of estimating characteristics of a wireless propagation channel and performing efficient power supply based on estimation results.

Patent Literature 2 discloses an electronic device capable of accurately performing carrier sensing to avoid interference with a wireless system.

### CITATION LIST

### PATENT LITERATURE

Patent Literature 1: JP2021-044873A
Patent Literature 2: JP2021-151061A

### SUMMARY OF INVENTION

### TECHNICAL PROBLEM

In wireless power supply systems, there is a problem that radio waves transmitted by a transmitter and a receiver affect other wireless devices.

Therefore, the present disclosure has been made in view of the above situation, and an object thereof is to provide a technology for suppressing the influence of radio waves transmitted by a transmitter and a receiver on other wireless devices in a wireless power supply system.

### SOLUTION TO PROBLEM

A wireless power supply system includes a plurality of transmitters, a plurality of receivers, and a control device configured to control the plurality of transmitters, in which the plurality of transmitters are capable of wirelessly supplying power to the plurality of receivers, the control device is configured to control the plurality of transmitters not to transmit radio waves over a second period for each first period, and the control device is configured to execute carrier sense control in a space where the plurality of transmitters and the plurality of receivers are arranged, during the second period.

### ADVANTAGEOUS EFFECTS OF INVENTION

According to the present disclosure, the influence of radio waves transmitted by each of the transmitters and the receivers on other wireless devices in a wireless power supply system can be suppressed.

### BRIEF DESCRIPTION OF DRAWINGS

FIG. 1 is a diagram showing an overall configuration of a WPT system 1 according to the present embodiment.
FIG. 2 is a block diagram showing an example of a configuration of a transmitter 100 and a receiver 200.
FIG. 3 is a block diagram showing a functional configuration of a control device C10.
FIG. 4 is a diagram showing a data structure of a WPT table C1012.
FIG. 5 is a diagram showing a data structure of a device table C1013.
FIG. 6 is a flow chart showing an operation of carrier sense processing (first embodiment).
FIG. 7 is a flow chart showing an operation of carrier sense processing (second embodiment).
FIG. 8 is a block diagram showing a basic hardware configuration of a computer 90.

### DESCRIPTION OF EMBODIMENTS

Hereinafter, embodiments of the present disclosure will be described with reference to the drawings. In all the drawings illustrating the embodiments, the same reference signs are assigned to common components, and repeated explanations are omitted. Note that the following embodiments are not intended to unduly limit the contents of the present disclosure recited in the claims. In addition, not all components shown in the embodiments are necessarily essential components of the present disclosure. Furthermore, each drawing is a schematic diagram and is not necessarily illustrated with strict accuracy.

### <Outline>

### <1. Overall Configuration Diagram of System>

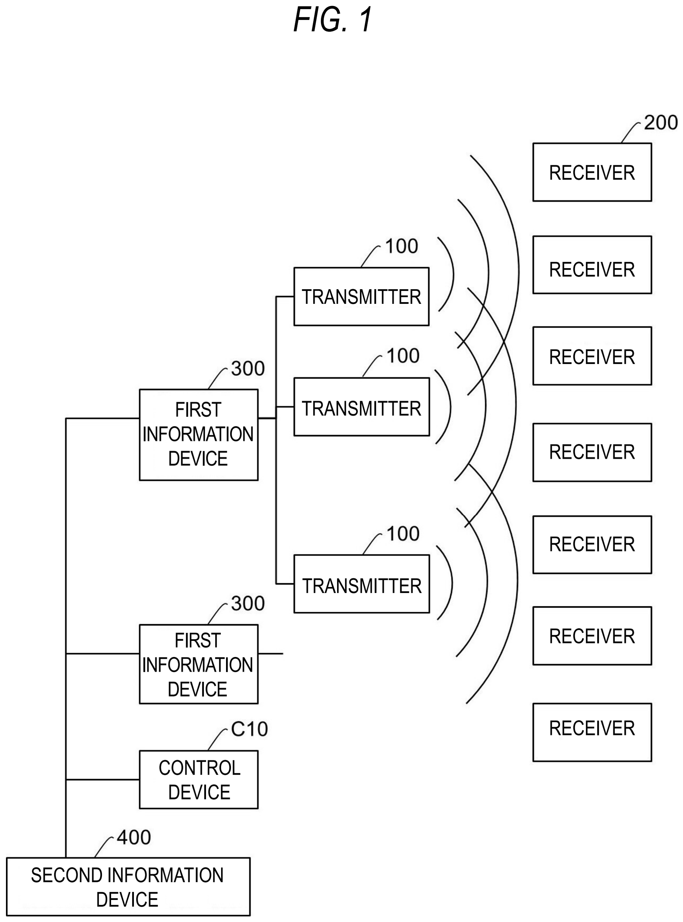

FIG. 1 is a diagram showing an overall configuration of a WPT system 1 according to the present embodiment.

The WPT system 1 shown in FIG. 1 includes, for example, transmitters 100, receivers 200, first information processing devices 300, a second information processing device 400, and a control device C10. The WPT system 1 shown in FIG. 1 is used, for example, in a building, a factory, or the like. Note that connection between the transmitter 100 and the first information processing device 300, connection between the first information processing device 300 and the second information processing device 400, and connection between the control device C10 and the first information processing device 300 and the second information processing device 400 may be either wired or wireless.

In FIG. 1, an example is shown in which the WPT system 1 includes three transmitters 100. However, the number of transmitters 100 included in the WPT system 1 is not limited to three. The number of transmitters 100 included in the WPT system 1 may be 2 or less, or 4 or more.

In FIG. 1, an example is shown in which the WPT system 1 includes seven receivers 200. However, the number of receivers 200 included in the WPT system 1 is not limited to seven. The number of receivers 200 included in the WPT system 1 may be 6 or less, or 8 or more.

In FIG. 1, an example is shown in which the WPT system 1 includes two first information processing devices 300. However, the number of first information processing devices 300 included in the WPT system 1 is not limited to two. The number of first information processing devices 300 included in the WPT system 1 may be one, or 3 or more.

The transmitter 100 is configured to transmit, for example, a power supply signal or a data signal (hereinafter, collectively referred to as a wireless signal) to the receiver 200. The transmitter 100 is configured to transmit the power supply signal to the receiver 200 by radio waves in the 920 MHz band, for example. The transmitter 100 is configured to transmit the data signal to the receiver 200 by radio waves in the 2.4 GHz band, for example. The transmitter 100 may be configured to transmit the data signal by radio waves in the 920 MHz band.

The transmitter 100 may be configured to transmit the power supply signal to one receiver 200, or may transmit the power supply signal to a plurality of receivers 200, for example. The transmitter 100 may be configured to transmit the data signal to one receiver 200, or may transmit the data signal to a plurality of receivers 200, for example. The transmitter 100 may be configured to transmit the same data signal as that of another transmitter 100, or may transmit a different data signal from that of another transmitter 100, for example. The transmitter 100 may be configured to transmit a predetermined command signal to the receiver 200 as the data signal, or may transmit a preset signal to the receiver 200 as the data signal, for example.

The transmitter 100 is configured to receive, for example, a data signal transmitted from the receiver 200. The transmitter 100 may be configured to receive a data signal transmitted from one receiver 200, or may receive data signals transmitted from a plurality of receivers 200, for example. The transmitter 100 is configured to transmit the data signal transmitted from the receiver 200 to the first information processing device 300. The transmitter 100 is configured to transmit information on a state of the transmitter 100 to the first information processing device 300.

The receiver 200 is configured to receive, for example, the power supply signal or data signal transmitted from the transmitter 100. In a case where the receiver 200 includes, for example, a battery, the receiver is configured to convert the power supply signal transmitted from the transmitter 100 into power and stores the converted power in the battery. In a case where the receiver 200 includes, for example, a predetermined sensor, the receiver is configured to convert the power supply signal transmitted from the transmitter 100 into power and drive the sensor with the converted power.

The receiver 200 is configured to transmit, for example, information on a state of the receiver 200 or information on a measurement result by the sensor, to the transmitter 100 as the data signal.

The first information processing device 300 is an information processing device configured to monitor the operations of the transmitter 100 and the receiver 200 accommodated in the WPT system 1. For example, the first information processing device 300 is configured to determine whether the transmitter 100 or the receiver 200 is in a preset state, based on the information on the states of the transmitter 100 and the receiver 200 transmitted from the transmitter 100. In a case where it is determined that the transmitter 100 or the receiver 200 is in the preset state, the first information processing device 300 is configured to transmit predetermined information to the second information processing device 400.

Additionally, the first information processing device 300 is configured to accumulate information on the transmitter 100 and the receiver 200 accommodated in the WPT system 1. For example, the first information processing device 300 is configured to store the information on the states of the transmitter 100 and the receiver 200 transmitted from the transmitter 100 in a storage unit provided in the first information processing device 300.

Additionally, the first information processing device 300 is configured to control the operation of the transmitter 100 accommodated in the WPT system 1.

Additionally, the first information processing device 300 is configured to control the operation of the transmitter 100 accommodated in the WPT system 1. For example, the first information processing device 300 is configured to transmit a predetermined instruction or information to the transmitter 100.

Additionally, the first information processing device 300 is configured to control the operation of the second information processing device 400.

The second information processing device 400 is, for example, an information processing device that is operated by an administrator of the WPT system 1. In a case where the second information processing device 400 receives, from the first information processing device 300, a notification to the effect that the transmitter 100, the receiver 200, or both accommodated in the WPT system 1 are in a predetermined state, the second information processing device presents, to a user, information indicating that the transmitter 100, the receiver 200, or both are in the predetermined state.

In addition, the second information processing device 400 is configured to analyze the information on the states of the transmitter 100 and the receiver 200 stored in the first information processing device 300, and present predetermined information to the user. The predetermined information includes, for example, the following:
· Information on the placement of the transmitter 100
· Information on the placement of the receiver 200
· Information on power consumption
· Information on power intensity

### <1.1 Configurations of Transmitter and Receiver>

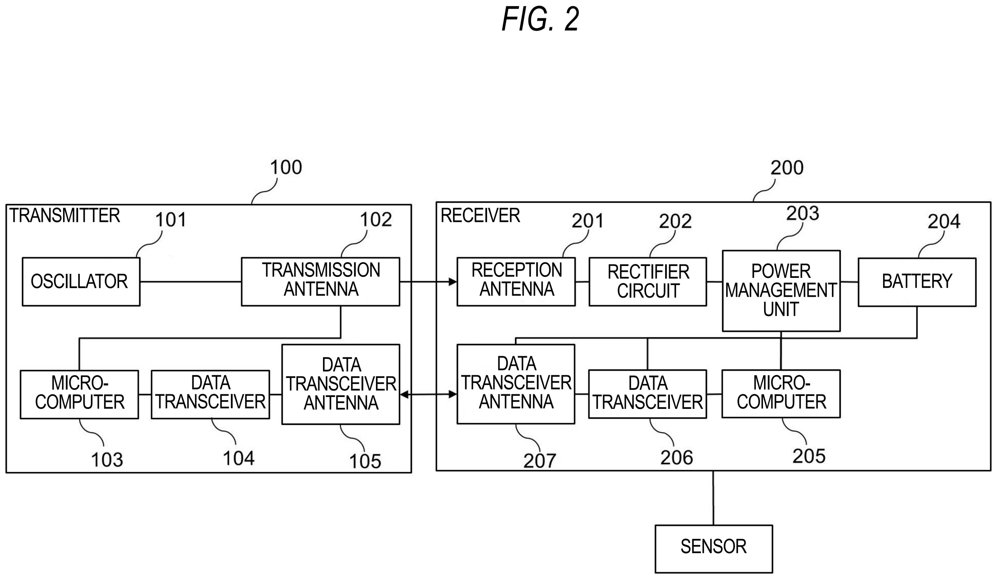

FIG. 2 is a block diagram showing an example of a configuration of the transmitter 100 and the receiver 200 shown in FIG. 1. As shown in FIG. 2, the transmitter 100 and the receiver 200 are spaced apart from each other by, for example, a predetermined interval. For example, the transmitter 100 and the receiver 200 are installed spaced apart from each other by a distance of several meters. Specifically, for example, the transmitter 100 is fixedly installed at an elevated position indoors, such as on the ceiling or at a predetermined high position provided on a wall. The receiver 200 is installed on a predetermined device indoors or placed near a device requiring power supply. Additionally, the receiver 200 may be carried by the user. The transmitter 100 transmits the power supply signal to the receiver 200 by radio waves in the 920 MHz band, for example. The receiver 200 converts the power supply signal transmitted from the transmitter 100 into power, and stores the converted power or supplies the converted power to a predetermined device.

The transmitter 100 includes, for example, an oscillator 101, a transmission antenna 102, a microcomputer (controller) 103, a data transceiver 104, and a data transceiver antenna 105. The oscillator 101, the microcomputer 103, the data transceiver 104, the data transceiver antenna 105, or at least a combination of these may be mounted on, for example, a printed circuit board (PCB).

The oscillator 101 is configured to oscillate a signal in a predetermined frequency band, for example, in the 920 MHz band. The oscillated signal may be amplified, if necessary, to remove unnecessary frequency components.

The transmission antenna 102 is configured to efficiently transmit, for example, radio waves in the 920 MHz band. The transmission antenna 102 is configured to radiate a signal oscillated by the oscillator 101 as a power supply signal.

The microcomputer 103 is configured to control the operation of the transmitter 100. The microcomputer 103 is implemented, for example, by a single-board computer equipped with an ARM processor. The microcomputer 103 is configured to control, for example, the transmission of radio waves by the transmission antenna 102.

The data transceiver 104 is configured to perform processing such as digital-to-analog conversion and modulation of analog data. In addition, the data transceiver 104 is configured to perform processing such as demodulation of a data signal received by the data transceiver antenna 105 and digitization of the demodulated data. The data transceiver 104 is configured to extract a predetermined signal from a data signal received by the data transceiver antenna 105, convert it into digital data, and transmit the converted digital data to the microcomputer 103, for example.

The data transceiver antenna 105 is configured to efficiently transmit and receive, for example, radio waves in the 2.4 GHz band. The data transceiver antenna 105 is configured to radiate a data signal supplied from the data transceiver 104. Additionally, the data transceiver antenna 105 is configured to receive a data signal transmitted from the receiver 200.

The receiver 200 includes, for example, a reception antenna 201, a rectifier 202, a power management unit 203, a battery 204, a microcomputer 205, a data transceiver 206, and a data transceiver antenna 207. The reception antenna 201, the rectifier 202, the power management unit 203, the battery 204, the microcomputer 205, the data transceiver 206, the data transceiver antenna 207, or at least a combination of these may be mounted on, for example, a PCB or an FPC (flexible circuit board).

The reception antenna 201 is configured to efficiently receive, for example, radio waves in the 920 MHz band. The reception antenna 201 is configured to receive a power supply signal radiated from the transmission antenna 102.

The rectifier 202 is configured to rectify the radio waves received as a power supply signal and convert the same into a direct current voltage.

The power management unit 203 is configured to manage a direct current voltage. For example, the power management unit 203 is configured to control a charging voltage based on the direct current voltage. The power management unit 203 is configured to charge the battery 204 by controlling the charging voltage. In addition, the power management unit 203 is configured to supply a direct current voltage to a connected member, in a case where an amount of power stored in the battery 204 is equal to or greater than a predetermined amount, for example.

Additionally, the power management unit 203 is configured to discharge the power stored in the battery 204, in accordance with control from the microcomputer 205.

The battery 204 is configured to store power, in accordance with an instruction from the power management unit 203. Additionally, the battery 204 is configured to discharge the stored power, in accordance with an instruction from the power management unit 203.

The microcomputer 205 is configured to control the operation of the receiver 200. The microcomputer 205 is operated by a direct current voltage supplied from the power management unit 203 or by power stored in the battery 204. The microcomputer 205 is configured to control the power management unit 203 to discharge power stored in the battery 204.

The receiver 200 may be connected to, for example, various sensors. For example, a heat sensor, a temperature sensor, a light sensor, a humidity sensor, a vibration sensor, and the like are connected to the receiver 200. The sensor connected to the receiver 200 is operated by, for example, a direct current voltage supplied from the power management unit 203 or power discharged from the battery 204. The microcomputer 205 continuously or intermittently monitors a voltage value at a predetermined portion of the receiver 200, a status of a sensor connected to the receiver 200, information detected by the sensor, and the like. The microcomputer 205 transmits a voltage value at a predetermined portion of the receiver 200, a status of a sensor connected to the receiver 200, information detected by the sensor, and the like to the data transceiver 206 as digital data. Note that the sensor may be built in the receiver 200.

The data transceiver 206 is configured to perform processing such as conversion of digital data supplied from the microcomputer 205 into analog data and modulation of analog data. In addition, the data transceiver 206 is configured to perform processing such as demodulation of a data signal received by the data transceiver antenna 207 and digitization of the demodulated data. The data transceiver 206 is operated by, for example, a direct current voltage supplied from the power management unit 203, or power discharged from the battery 204.

The data transceiver antenna 207 is configured to efficiently transmit and receive, for example, radio waves in the 2.4 GHz band. The data transceiver antenna 207 is configured to radiate a data signal supplied from the data transceiver 206. Additionally, the data transceiver antenna 207 is configured to receive a data signal transmitted from the transmitter 100. The data transceiver antenna 207 is operated by, for example, a direct current voltage supplied from the power management unit 203, or power discharged from the battery 204.

In addition, in each embodiment described above, the application to the so-called WPT system 1, which wirelessly transmits transmission power composed of an AC signal from the transmitter 100 to the receiver 200, has been described, but application to a system that provides power to the receiver 200 by other methods is also naturally possible. Since such systems are already known, detailed description thereof will be omitted, but examples include a system that delivers power generated by solar power generation to the receiver 200 by either wired or wireless means, and a system that delivers power to the receiver 200 by either wired or wireless means using laser light. In addition, it can be applied to a configuration in which vibration or sound is applied to the receiver 200, and the receiver 200 converts power such as vibration into power. Additionally, it can be naturally applied to systems using already known contactless power supply technologies other than wirelessly receiving transmission power consisting of an AC signal, such as a contactless power supply technology by a magnetic field coupling method.

### <Configuration of Control Device C10>

The control device C10 is an information processing device including a storage unit C101 and a control unit C104.

In the present disclosure, the control device C10 is disclosed as an information processing device different from the first information processing device 300 and the second information processing device 400, but the first information processing device 300 or the second information processing device 400 may have the function of the control device C10. That is, the control device C10 may be the first information processing device 300 or the second information processing device 400.

In addition, the function of the control device C10 may be included in at least one of the plurality of transmitters 100 and may be realized as part of the function of the transmitter 100. That is, the processing that the control device C10 can execute may be executed by the transmitter 100. That is, transmitter 100 may include part of hardware and software configurations of the control device C10.

For example, any one of the plurality of transmitters 100 may serve as a parent device (host) of another transmitter 100, perform the function of the control device C10, and execute various processing. That is, the transmitter 100 related to the parent device includes part of hardware and software configurations to function as the control device C10.

Note that all the transmitters 100 may be configured to include part of hardware and software configurations to function as the control device C10. In this case, a selected predetermined transmitter 100 may serve as a parent device and perform the function of the control device C10. The parent device may be selected through an input operation of the user.

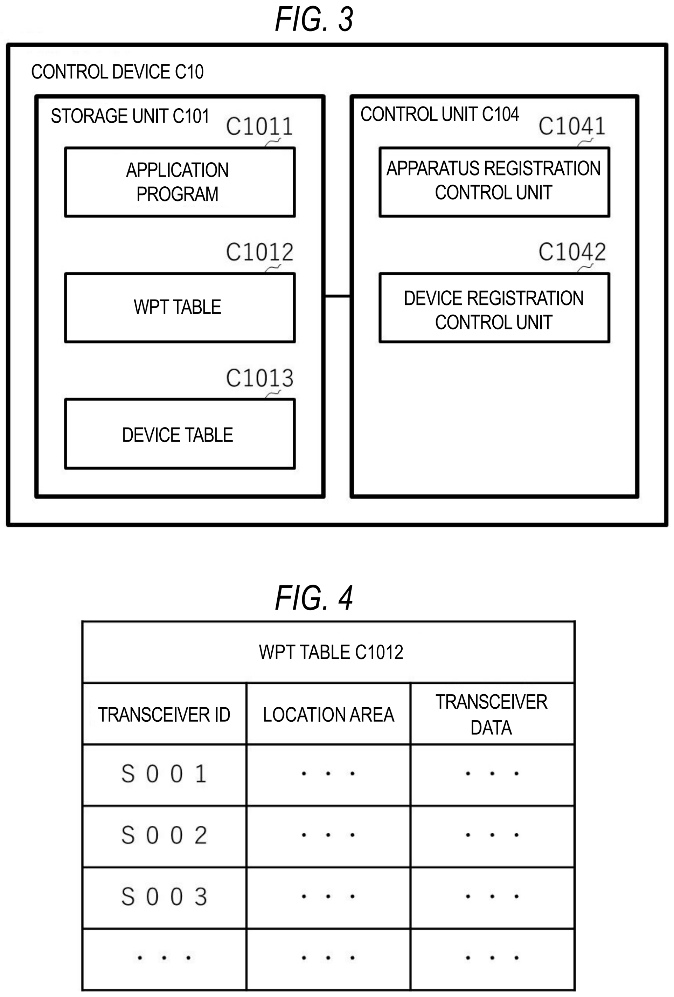

FIG. 3 is a block diagram showing a functional configuration of the control device C10.

### <Configuration of Storage Unit C101 of Control Device C10>

The storage unit C101 of the control device C10 includes an application program C1011, a WPT table C1012, and a device table C1013.

The application program C1011 is a program for causing the control unit C104 of the control device C10 to function as each functional unit.

The application program C1011 includes an application such as a web browser application.

The WPT table C1012 is a table for storing and managing information (transceiver information) regarding transmitters and receivers included in the WPT system 1. Specifically, the WPT table is configured to store which transmitters and receivers are associated with which WPT system 1.

The WPT table C1012 is a table having columns of a transceiver ID, a location area, and transceiver data, with the transceiver ID as a primary key.

The user transmits, to the control device C10, a request to register a device including the transceiver information via an information processing terminal. An apparatus registration control unit C1041 of the control device C10 stores the received transceiver information in the location area and transceiver data fields of the WPT table 1021.

FIG. 4 is a diagram showing a data structure of the WPT table C1012.

The transceiver ID is a field that stores transceiver identification information for identifying a transceiver. The transceiver identification information is a field in which a unique value is set for each transceiver information.

The location area is a field that stores information on an area where a transceiver is located. The location area includes area identification information that specifies an area. An area indicates any physical region in which a user can be present, including, for example, a part or all of a space such as a room or a corridor, a seat placed in a room, a predetermined region range in an outdoor space, a part or all of a vehicle space such as an automobile, a bus, or a train, or a seat in an automobile, a bus, or a train. The area identification information is information for identifiably specifying the physical region.

The transceiver data is a field that stores information on a transceiver.
· Information indicating whether it is a transmitter or a receiver.
· Individual identification information for identifying an individual transmitter or receiver.
· Information on radio waves, such as a frequency band used by a transmitter or a receiver.
· For a receiver, information on a remaining capacity of a battery, a sensing device, and an actuator, for example.

Any other information associated with a transmitter and a receiver is stored.

The device table C1013 is a table for storing and managing information (device information) regarding wireless devices not included in the WPT system 1.

The device table C1013 is a table having columns of a device ID, a location area, and device data, with the device ID as a primary key.

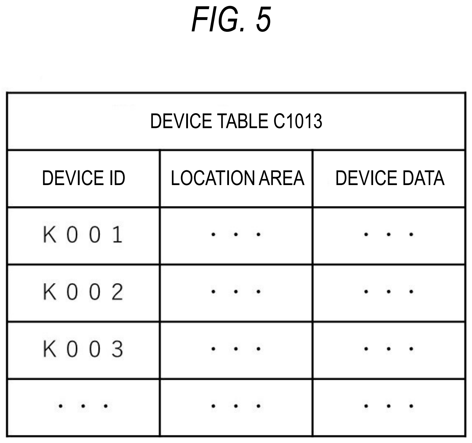

FIG. 5 is a diagram showing a data structure of the device table C1013.

The device ID is a field that stores device identification information for identifying a wireless device. The device identification information is a field in which a unique value is set for each device information. The wireless device in the present disclosure is mainly a low power wide area network (LPWA), and uses wireless communication technology that enables long-distance data communication with low power consumption.

The location area is a field that stores information on an area where a wireless device is located. The location area includes area identification information that specifies an area. An area indicates any physical region in which a user can be present, including, for example, a part or all of a space such as a room or a corridor, a seat placed in a room, a predetermined region range in an outdoor space, a part or all of a vehicle space such as an automobile, a bus, or a train, or a seat in an automobile, a bus, or a train. The area identification information is information for identifiably specifying the physical region.

The device data is a field that stores information on a wireless device.
· Individual identification information for identifying an individual wireless device.
· Information on radio waves, such as a frequency band used by a wireless device.
· Information on the type of wireless device. For example, information on a wireless microphone, a wireless LAN, a Bluetooth (registered trademark) device, and the like is included.

### <Configuration of Control Unit C104 of Control Device C10>

The control unit C104 of the control device C10 includes an apparatus registration control unit C1041 and a device registration control unit C1042. The control unit C104 realizes each functional unit by executing the application program C1011 stored in the storage unit C101.

The control device C10 is capable of controlling the plurality of transmitters via a wired connection.

Specifically, the control device C10 may be connected by wire to the plurality of transmitters 100 based on any wired connection standard such as Ethernet, USB (Universal Serial Bus), or a serial connection. The control unit C104 of the control device C10 is capable of controlling transmission of a power supply signal and transmission and reception of a data signal of the transmitter 100 by transmitting a control signal to the transmitter 100 via a wired connection.

The control device C10 is capable of controlling the plurality of transmitters via a wireless connection.

Specifically, the control device C10 may be connected wirelessly to the plurality of transmitters 100 based on any wireless connection standard such as WiFi, Bluetooth (registered trademark), NFC (Near Field Communication), Zigbee (registered trademark), Z-Wave, or LTE. The control unit C104 of the control device C10 is capable of controlling transmission of a power supply signal and transmission and reception of a data signal of the transmitter 100 by transmitting a control signal to the transmitter 100 via a wireless connection.

The control device C10 is capable of controlling the plurality of transmitters via a wired connection.

Specifically, the control device C10 may be connected by wire to the plurality of transmitters 100 based on any wired connection standard such as Ethernet, USB (Universal Serial Bus), or a serial connection. The control unit C104 of the control device C10 is capable of controlling transmission of a power supply signal and transmission and reception of a data signal of the transmitter 100 by transmitting a control signal to the transmitter 100 via a wired connection.

The control device C10 is capable of controlling the plurality of transmitters via a wireless connection.

Specifically, the control device C10 may be connected wirelessly to the plurality of transmitters 100 based on any wireless connection standard such as WiFi, Bluetooth (registered trademark), NFC (Near Field Communication), Zigbee (registered trademark), Z-Wave, or LTE. The control unit C104 of the control device C10 is capable of controlling transmission of a power supply signal and transmission and reception of a data signal of the transmitter 100 by transmitting a control signal to the transmitter 100 via a wireless connection.

### <Operations of Control Device C10>

Control of the transmitter 100 by the control unit C104 of the control device C10 will be described.

The control unit C104 of the control device C10 is configured to control the plurality of transmitters not to transmit radio waves over a second period for each first period. The control unit C104 of the control device C10 executes carrier sense control in a space where the plurality of transmitters and the plurality of receivers are arranged, during the second period. Carrier sense control is control for determining whether another wireless device is transmitting radio waves in a frequency band that may interfere with a frequency band of radio waves output by a transmitter.

Specifically, the control unit C104 of the control device C10 is configured to execute control for detecting surrounding radio waves before the transmitter 100 transmits a power supply signal and a data signal. Specifically, the control unit C104 of the control device C10 controls the transmitter 100 and the receiver 200 not to transmit radio waves over a second period (50 milliseconds) for each first period (4 seconds). The control unit C104 of the control device C10 causes the transmitter 100 to detect radio waves present in the space during the second period in which the WPT system 1 does not transmit radio waves. The transmitter 100 is configured to detect radio waves by the data transceiver 104. As a result, the control unit C104 of the control device C10 can detect whether another wireless device in operation is present in the space and which frequency band the wireless device is using. Note that the control unit C104 of the control device C10 is capable of detecting the presence of another wireless device present in the surroundings for each of the plurality of transmitters 100. In addition, detection of radio waves may be based not on the data transceiver 104 of the transmitter 100 but on a radio wave receiver provided in the control device C10 or in another device.

Specifically, during the second period, the control unit C104 of the control device C10 detects whether radio waves are present in the vicinity of the 920 MHz band used when transmitting and receiving a power supply signal and the 2.4 GHz band used when transmitting and receiving a data signal. For example, the control unit C104 of the control device C10 detects whether radio waves are present in frequency bands that may cause interference, including not only the 900 MHz band, the 920 MHz band, and the 880 MHz band, but also a distant range such as the 5 GHz band.

For example, the control unit C104 of the control device C10 monitors a target frequency band and compares the strength of a detected wireless signal with a predetermined threshold value. The control unit C104 of the control device C10 determines that another wireless device is present when a wireless signal having a signal strength equal to or greater than the predetermined threshold value is detected. Additionally, the control unit C104 of the control device C10 may determine that another wireless device is present when a predetermined signal pattern is included in the detected wireless signal. The control unit C104 of the control device C10 determines, in other cases, that no other wireless device is present.

The control unit C104 of the control device C10 is configured to dynamically control at least one of the first period and the second period based on the result of the carrier sense control.

Specifically, the control unit C104 of the control device C10 is configured to control the first period and the second period depending on the presence or absence of another wireless device in the space detected by the carrier sense control.

For example, in a case where the control unit C104 of the control device C10 detects the presence of another wireless device, it shortens the first period and lengthens the second period. Accordingly, the control unit C104 of the control device C10 can detect in more detail the state of radio waves used by another wireless device during the second period. In addition, the control unit C104 of the control device C10 determines that no other wireless device is present when no wireless signal can be detected during the second period.

The control unit C104 of the control device C10 is configured to execute control for notifying an external party such as a user of a control state.

The control unit C104 of the control device C10 is configured to cause a display device, such as an LED provided in the control device C10, to be turned on in a predetermined color or in a predetermined blinking pattern (first notification pattern) during a period in which carrier sense control is executed.

When the control unit C104 of the control device C10 is configured to detect that another wireless device is transmitting radio waves, the control unit C104 causes the LED or the like provided in the control device C10 to be turned on in a predetermined color or in a predetermined blinking pattern (first notification pattern) during a predetermined period.

When the control unit C104 of the control device C10 executes control (radio wave stopping step) so that the transmitter 100 does not transmit radio waves, the control unit C104 causes the LED or the like provided in the control device C10 to be turned on in a predetermined color or in a predetermined blinking pattern (third notification pattern) during a period in which the radio waves are stopped. When the transmitter 100 is not transmitting radio waves, the control unit C104 of the control device C10 may cause the LED or the like provided in the control device C10 to be turned on in a predetermined color or in a predetermined blinking pattern (third notification pattern) to indicate information to the effect that the radio waves are not being transmitted.

The control unit C104 of the control device C10 may control a display device such as an LED provided in the transmitter 100 instead of the display device provided in the control device C10. The control unit C104 of the control device C10 may control a display device such as an LED provided in the receiver 200 instead of the display device provided in the control device C10.

The control unit C104 of the control device C10 may display a control state on a display device such as a display. In addition, the control unit C104 of the control device C10 may display the control state on an information processing terminal carried by a user or the like.

As a result, the user can visually check the control state of the control device C10.

### <Operation of WPT System 1>

Below, each processing of the WPT system 1 will be described.

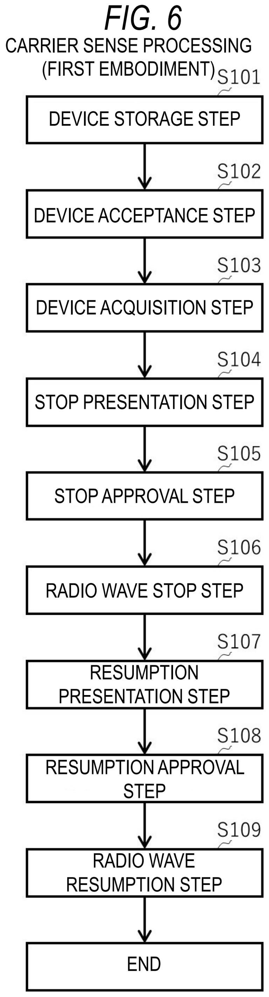

FIG. 6 is a flow chart showing an operation of carrier sense processing (first embodiment).

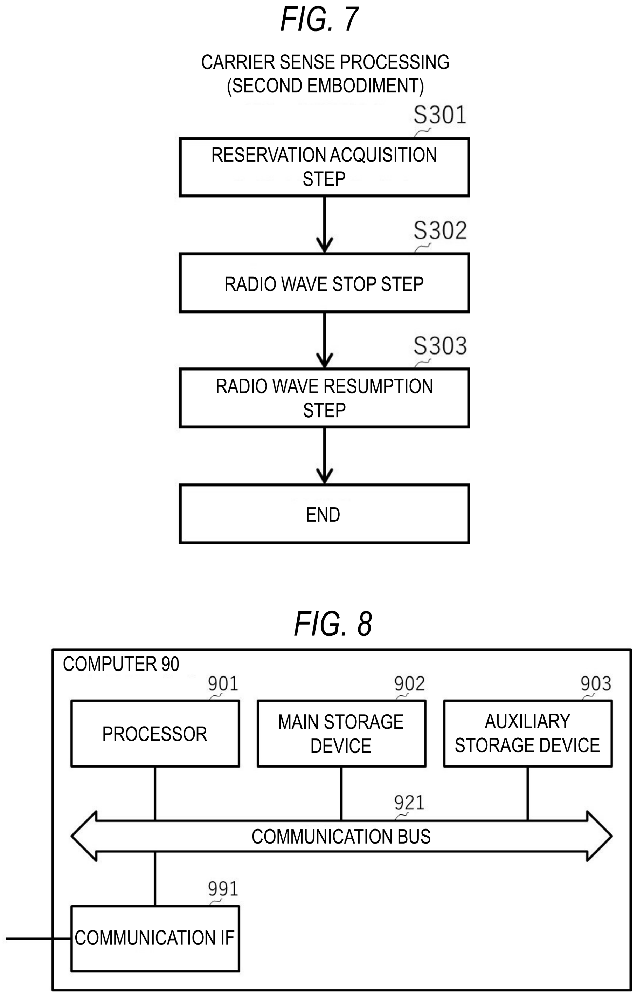

FIG. 7 is a flow chart showing an operation of carrier sense processing (second embodiment).

### <Carrier Sense Processing (First Embodiment)>

Carrier sense processing (first embodiment) is processing for determining whether another wireless device is transmitting radio waves in a frequency band that may interfere with a frequency band of radio waves output by a transmitter.

### <Outline of Carrier Sense Processing (First Embodiment)>

Carrier sense processing (first embodiment) is a series of processes of accepting, from a user, an input operation of another wireless device located in a space where a transmitter and a receiver are present, storing the accepted information on the wireless device, acquiring the stored information on the wireless device, presenting, to an administrator, whether or not to stop radio wave transmission by the transceiver in accordance with the information on the wireless device, accepting an approval operation concerning the stop, stopping the radio wave transmission by the transceiver, presenting, after the stop, to the administrator whether or not to resume the radio wave transmission by the transceiver, accepting an approval operation concerning the resumption, and resuming the radio wave transmission by the transceiver.

### <Details of Carrier Sense Processing (First Embodiment)>

Below, details of the carrier sense processing (first embodiment) will be described.

In step S101, the control unit C104 of the control device C10 executes a device storage step of storing information on a wireless device.

Specifically, a user can transmit a location area, device data, and the like of any wireless device to the control device C10 by operating an input device of an information processing terminal. The device registration control unit C1042 of the control device C10 stores the received location area and device data of the wireless device in the location area and device data fields of the device table C1013, respectively. As a result, the user can register a new wireless device as device information in the device table C1013. Note that registration of the wireless device is not necessarily required to be performed in the carrier sense processing (first embodiment), and may be configured to be performed at any timing.

In step S102, the control unit C104 of the control device C10 executes a device acceptance step of accepting an input operation of the information on the wireless device stored in the device storage step from the user.

Specifically, the user inputs a URL of a page (input operation processing page) for executing input operation processing into a web browser or the like by operating an input device of an information processing terminal placed in a predetermined conference room or the like, and opens the input operation processing page. A control unit of the information processing terminal transmits a request to open the input operation processing page to the control device C10. The control unit C104 of the control device C10 searches, based on the received request, the device table C1013 for the location area field based on a location area of the predetermined conference room or the like, and acquires one or more pieces of device information. The control unit C104 of the control device C10 generates, based on the acquired one or more pieces of device information, an input operation processing page that lists, in a selectable form, one or more wireless devices present in the predetermined conference room or the like, and transmits the generated input operation processing page to the information processing terminal. The control unit of the information processing terminal displays the received input operation processing page on the display.

The user selects a predetermined wireless device from one or more wireless devices displayed in a list form by operating the input device of the information processing terminal. That is, the user selects some or all of the wireless devices to be used among one or more wireless devices located in the predetermined conference room or the like by operating the input device of the information processing terminal. For example, when the user is to use a wireless microphone in the conference room, the user selects the wireless microphone as a wireless device by operating the input device of the information processing terminal.

The user inputs a period of use of the selected wireless device into a period-of-use field provided on the input operation processing page by operating the input device of the information processing terminal. For example, when the user is to use a wireless microphone for one hour from the current time, the user inputs a value of "1 hour" as the period of use by operating the input device of the information processing terminal. The control unit of the information processing terminal transmits device IDs of one or more wireless devices selected by the user and the input period of use to the control device C10. The control unit C104 of the control device C10 receives and accepts the device IDs of one or more wireless devices and the period of use.

A configuration is also possible in which the user opens the input operation processing page by inputting information on a location area specifying a predetermined conference room or the like using the user's information processing terminal (user terminal) such as a smartphone or a PC. The user can select any wireless device placed in the predetermined conference room or the like using any information processing terminal.

Note that a configuration is also possible in which the user inputs information on availability and a period of use of the predetermined conference room or the like by operating the input device of the information processing terminal. In this case, the input device of the information processing terminal transmits a request including a location area and a period of use of the predetermined conference room or the like to the control device C10. The control unit C104 of the control device C10 searches the device table C1013 for the location area field based on the received location area, and acquires and accepts device IDs of all wireless devices present in the predetermined conference room or the like. Additionally, in this case, the control unit C104 of the control device C10 regards the periods of use of all acquired wireless devices as the period of use of the predetermined conference room. The control unit C104 of the control device C10 acquires and accepts the device IDs and periods of use of all wireless devices present in the predetermined conference room or the like.

Note that it is not necessarily required for the user to input the period of use. A configuration is also possible in which the period of use starts from an operation of the input device of the information processing terminal by the user. Additionally, an end of the period of use may be determined by accepting an input operation on the input device of the information processing terminal by the user. For example, the period of use may be terminated when the user presses a "Terminate use' button or the like displayed on the information processing terminal.

In step S103, the control unit C104 of the control device C10 executes a device acquisition step of acquiring information on other wireless devices present in the space.

Specifically, the control unit C104 of the control device C10 searches the device table C1013 for the device ID field, based on the device IDs of some or all of the wireless devices located in the predetermined conference room or the like acquired in step S101, and acquires the location area and device data. Accordingly, the control unit C104 of the control device C10 can acquire information on some or all of the wireless devices located in the predetermined conference room or the like.

In step S103, the device acquisition step executes a step of acquiring information on a location, a frequency band, and an operation period of the wireless device.

Specifically, the control unit C104 of the control device C10 acquires information on the frequency band of the wireless device included in the device data of some or all of the wireless devices located in the predetermined conference room or the like. In addition, the periods of use of one or more wireless devices accepted in step S101 are specified as the operation periods of the respective wireless devices and accepted.

In step S103, the device acquisition step executes a step of acquiring information on the wireless device accepted in the device acceptance step.

Specifically, when the device information on a wireless device is stored in the device table C1013 in step S101, the control unit C104 of the control device C10 acquires the device data stored in the device table C1013.

In step S104, the control unit C104 of the control device C10 executes a stop presentation step of presenting, to a predetermined administrator, information indicating that a plurality of transmitters are controlled not to transmit radio waves, prior to a radio wave stop step.

Specifically, the control unit C104 of the control device C10 searches the WPT table C1012 for the location area and transceiver data fields, based on the location area and device data of the wireless device acquired in step S103. The control unit C104 of the control device C10 searches the WPT table C1012, based on the frequency band of radio waves included in the device data, for a record relating to transceiver data including a frequency band that may interfere with the frequency band of radio waves included in the device data.

Specifically, the control unit C104 of the control device C10 searches the WPT table C1012 for a transmitter 100 and a receiver 200 whose frequency bands at least partially overlap with the frequency band of radio waves transmitted by the wireless device included in the device data, and specifies them.

The control unit C104 of the control device C10 notifies an information processing terminal of a user associated with an administrator associated with the specified transmitter 100 and receiver 200 of information indicating that the transmitter 100 and the receiver 200 are to be controlled not to transmit radio waves. For example, the control unit C104 of the control device C10 transmits a message such as "The radio wave transmission by transmitter ••and receiver •• located in area •• will be stopped. Do you approve?" to the information processing terminal of the administrator. The information processing terminal displays the received message and presents it to the administrator.

The administrator includes a person having authority to manage radio wave transmission in the location area accepted in step S101, a licensee having a radio-related qualification or license such as a radio station license, and the like. The administrator also includes a person who operates and manages the specified transmitter 100 and receiver 200.

In step S105, the control unit C104 of the control device C10 executes a stop approval step of accepting an approval operation from a predetermined administrator to approve controlling a plurality of transmitters so as not to transmit radio waves, according to the stop presentation step.

Specifically, the administrator checks the message transmitted to the information processing terminal and selects an "Approve stop" button displayed on the information processing terminal. The control unit of the information processing terminal transmits a request to stop transmission of radio waves to the control device C10.

In step S106, the radio wave stop step executes a step of controlling a plurality of transmitters not to transmit radio waves, based on the information on wireless devices acquired in the device acquisition step, according to the approval operation accepted in the stop approval step.

Specifically, upon receiving a request, the control unit C104 of the control device C10 stops radio wave transmission by the transmitter 100 and receiver 200 specified in step S104. Note that the control unit C104 of the control device C10 may automatically stop radio wave transmission by the transmitter 100 and the receiver 200 over the operation period of the wireless device specified in step S103. That is, when stopping the transmission of radio waves, the processes of steps S104 and S105 may be omitted.

Accordingly, the control unit C104 of the control device C10 controls the plurality of transmitters not to transmit radio waves so that the radio waves transmitted by the plurality of transmitters do not interfere with the radio waves transmitted by the wireless device, based on the location, frequency band, and operation period of the wireless device.

In step S107, the control unit C104 of the control device C10 executes a resumption presentation step of presenting, to a predetermined administrator, information indicating that a plurality of transmitters are to be controlled to transmit radio waves.

Specifically, the user inputs information indicating that the use of a wireless device located in the predetermined conference room or the like has been terminated into the input operation processing page by operating the input device of the information processing terminal placed in the predetermined conference room or the like. For example, the user presses a "Terminate use" button displayed on the information processing terminal. The control unit of the information processing terminal transmits a request to resume transmission of radio waves to the control device C10.

The control unit C104 of the control device C10 notifies the information processing terminal of a user associated with an administrator associated with the specified transmitter 100 and receiver 200 of information indicating that transmission of radio waves by the transmitter 100 and the receiver 200 is to be resumed. For example, the control unit C104 of the control device C10 transmits a message such as "The radio wave transmission by transmitter •• and receiver •• located in area •• will be resumed. Do you approve?" to the information processing terminal of the administrator." The information processing terminal displays the received message and presents it to the administrator.

Note that the control unit C104 of the control device C10 may automatically transmit the message to the information processing terminal of the administrator after the operation period specified in step S103 has elapsed, without accepting an input operation by the user.

In step S108, the control unit C104 of the control device C10 executes a resumption approval step of accepting an approval operation from a predetermined administrator to approve controlling a plurality of transmitters so as to transmit radio waves, according to the resumption presentation step.

Specifically, the administrator checks the message displayed on the information processing terminal and selects an "Approval button" displayed on the information processing terminal. The control unit of the information processing terminal transmits a request to resume transmission of radio waves to the control device C10.

In step S109, the control unit C104 of the control device C10 executes a radio wave resumption step of transmitting radio waves for supplying power from a plurality of transmitters to a plurality of receivers, according to the approval operation accepted in the resumption approval step.

Specifically, upon receiving a request, the control unit C104 of the control device C10 starts radio wave transmission by the specified transmitter 100 and receiver 200.

In step S109, after a predetermined period of time has elapsed from the radio wave stop step, the control unit C104 of the control device C10 executes a determination step of determining that the wireless device is not in operation, based on the information on wireless devices acquired in the device acquisition step.

Specifically, the control unit C104 of the control device C10 may automatically cause radio wave transmission by the transmitter 100 and the receiver 200 to be started after the operation period specified in step S103 has elapsed. That is, when resuming transmission of radio waves, the processes of steps S107 and S108 may be omitted.

In step S109, in a case where the control unit C104 of the control device C10 determines in the determination step that the wireless device is not in operation, it executes a radio wave resumption step of transmitting radio waves for supplying power from a plurality of transmitters to a plurality of receivers.

Specifically, the control unit C104 of the control device C10 detects radio waves transmitted by the wireless device in the location area and determines whether the wireless device in the location area is in operation. For example, based on the frequency band of the radio waves included in the device information acquired in step S103, the control unit C104 of the control device C10 may determine whether the wireless device is in operation by detecting the presence or absence of radio waves in the vicinity of the frequency band.

When the control unit C104 of the control device C10 determines that the wireless device is not in operation, it automatically causes radio wave transmission by the transmitter 100 and the receiver 200 to be started.

As a result, even when the transmitter has stopped transmission of radio waves so as to suppress the influence on other wireless devices, the transmitter can resume wireless power supply while suppressing radio wave interference with the other wireless devices.

### <Carrier Sense Processing (Second Embodiment)>

Carrier sense processing (second embodiment) is processing for determining whether another wireless device is transmitting radio waves in a frequency band that may interfere with a frequency band of radio waves output by a transmitter.

### <Outline of Carrier Sense Processing (Second Embodiment)>

Carrier sense processing (second embodiment) is a series of processes of acquiring reservation information on scheduled use of other wireless devices present in a space where a transmitter and a receiver are located, stopping radio wave transmission by a transceiver at the start date and time of the scheduled information, and resuming radio wave transmission by the transceiver at the end date and time of the scheduled information.

### <Details of Carrier Sense Processing (Second Embodiment)>

Below, details of the carrier sense processing (second embodiment) will be described.

In step S301, the control unit C104 of the control device C10 executes a reservation acquisition step of acquiring reservation information on scheduled use of wireless devices present in the space.

Specifically, the control unit C104 of the control device C10 searches the WPT table C1012 and acquires information on the location area and transceiver data of each of the transmitters 100 and the receivers 200.

The control unit C104 of the control device C10 accesses a reservation management system (not shown) or the like in the conference room, based on the acquired location area, and acquires information on scheduled use of the location area where the transmitter 100 and the receiver 200 are present.

The control unit C104 of the control device C10 searches the device table C1013 for the location area field, based on the acquired location area, and acquires the device data.

Accordingly, the control unit C104 of the control device C10 can acquire and specify, for each area where the transmitter 100 and the receiver 200 are present, device data of wireless devices that may be used during the scheduled use (device data of wireless devices present in the area), together with reservation information on a period of the scheduled use of the area.

In step S302, the control unit C104 of the control device C10 executes a radio wave stop step of controlling a plurality of transmitters not to transmit radio waves so that radio waves for supplying power from the plurality of transmitters to the plurality of receivers do not interfere with radio waves transmitted by the wireless device, based on the reservation information acquired in the reservation acquisition step.

Specifically, the control unit C104 of the control device C10 determines, based on the reservation information and device data acquired in step S301, whether there is a risk of interference between a frequency band of radio waves used by the transmitter 100 and the receiver 200 and a frequency band of radio waves transmitted by a wireless device present in the area where the transmitter 100 and the receiver 200 are located. Specifically, the control unit C104 of the control device C10 determines whether the frequency band of the radio waves used by the transmitter 100 and the receiver 200 at least partially overlaps with the frequency band of the radio waves transmitted by the wireless device included in the device data.

When the control unit C104 of the control device C10 determines that the transmitter 100 and the receiver 200 interfere with the wireless device, it controls the transmitter 100 and the receiver 200 not to transmit wireless signals during the period of use included in the reservation information. Specifically, the control unit C104 of the control device C10 controls the transmitter 100 and the receiver 200 to stop transmission of wireless signals.

In step S302, the radio wave stop step executes a step of specifying a frequency band and an operation period of the wireless device based on the contents of the scheduled use of the space included in the reservation information acquired in the reservation acquisition step, and controlling the plurality of transmitters not to transmit radio waves so that radio waves for supplying power from the plurality of transmitters to the plurality of receivers do not interfere with the radio waves transmitted by the wireless device.

Specifically, the reservation information acquired by the control unit C104 of the control device C10 in step S301 may include a device ID for specifying a wireless device scheduled to be used during a period of the scheduled use. The control unit C104 of the control device C10 acquires device data by searching the device table C1013 for the device ID based on the acquired device ID.

In this case, the control unit C104 of the control device C10 determines, based on the reservation information and device data acquired in step S301, whether there is a risk of interference between a frequency band of radio waves used by the transmitter 100 and the receiver 200 and a frequency band of radio waves transmitted by a wireless device that is present in the area where the transmitter 100 and the receiver 200 are located and is scheduled to be used. That is, the control unit C104 of the control device C10 determines whether interference occurs only for a wireless device scheduled to be used, rather than for all wireless devices present in the location area.

When the control unit C104 of the control device C10 determines that the transmitter 100 and the receiver 200 interfere with the wireless device, it controls the transmitter 100 and the receiver 200 not to transmit wireless signals during the period of use included in the reservation information. Specifically, the control unit C104 of the control device C10 controls the transmitter 100 and the receiver 200 to stop transmission of wireless signals.

In step S303, the control unit C104 of the control device C10 determines whether the period of use of the location area, included in the reservation information, where the transmitter 100 and the receiver 200 are located has elapsed by comparing the period of use of the location area with the current date and time. When the control unit C104 of the control device C10 determines that the period of use of the location area has elapsed, it resumes transmission of wireless signals by the transmitter 100 and the receiver 200 present in the location area.

Accordingly, the control unit C104 of the control device C10 can suppress radio wave interference with other wireless devices present in the area by stopping transmission of wireless signals by the transmitter 100 and the receiver 200 over the reservation period in accordance with the reservation information, in the area where the transmitter 100 and the receiver 200 are present. Additionally, after the reservation period ends, transmission of wireless signals by the transmitter 100 and the receiver 200 may be automatically resumed. Accordingly, the control unit C104 of the control device C10 can minimize a period in which the transmitter 100 and the receiver 200 cannot transmit wireless signals and thus do not function.

Note that, also in the carrier sense processing (second embodiment), as in the carrier sense processing (first embodiment), the stop presentation step (S104) and the stop approval step (S105) may be executed prior to the radio wave stop step (S302). Additionally, the resumption presentation step (S107) and the resumption approval step (S108) may be executed prior to the radio wave resumption step (S303).

### <Basic Hardware Configuration of Computer>

FIG. 8 is a block diagram showing a basic hardware configuration of a computer 90. The computer 90 includes at least a processor 901, a main storage device 902, an auxiliary storage device 903, and a communication IF 991 (interface). They are electrically connected to each other by a communication bus 921.

The processor 901 is hardware for executing an instruction set described in a program. The processor 901 includes an arithmetic unit, a register, a peripheral circuit, and the like.

The main storage device 902 is for temporarily storing a program, data processed by the program, and the like. For example, it is a volatile memory such as DRAM (Dynamic Random Access Memory).

The auxiliary storage device 903 is a storage device for storing data and a program. Examples include a flash memory, a hard disk drive (HDD), a magneto-optical disk, a CD-ROM, a DVD-ROM, and a semiconductor memory.

The communication IF 991 is an interface for inputting and outputting signals for communication with other computers via a network using a wired or wireless communication standard.

The network includes various mobile communication systems constructed using the Internet, a LAN, a wireless base station, and the like. For example, the network includes 3G, 4G, and 5G mobile communication systems, LTE (Long Term Evolution), and wireless networks (e.g., Wi-Fi (registered trademark)) capable of connecting to the Internet via a predetermined access point. In the case of wireless connection, communication protocols may include, for example, Z-Wave (registered trademark), ZigBee (registered trademark), Bluetooth (registered trademark), and the like. In the case of wired connection, the network also includes direct connection via a USB (Universal Serial Bus) cable, and the like.

Note that the computer 90 may be virtually implemented by distributing all or part of each hardware configuration across a plurality of computers 90 and interconnecting them via a network. As such, the computer 90 is a concept that includes not only a computer 90 housed in a single housing or case, but also a virtualized computer system.

### <Basic Functional Configuration of Computer 90>

The functional configuration of a computer implemented by the basic hardware configuration (FIG. 8) of the computer 90 will be described. The computer includes at least functional units of a control unit, a storage unit, and a communication unit.

Note that the functional units of the computer 90 may be implemented by distributing all or part of each functional unit across a plurality of computers 90 interconnected via a network. As such, the computer 90 is a concept that includes not only a single computer 90, but also a virtualized computer system.

The control unit is implemented by the processor 901 reading out various programs stored in the auxiliary storage device 903, loading them into the main storage device 902, and executing processing in accordance with the programs. The control unit may implement functional units that perform various types of information processing depending on the type of program. As a result, the computer is implemented as an information processing device that performs information processing.

The storage unit is implemented by the main storage device 902 and the auxiliary storage device 903. The storage unit stores data, various programs, and various databases. Additionally, the processor 901 may secure a storage area corresponding to a storage unit in the main storage device 902 or the auxiliary storage device 903 depending on the program. In addition, the control unit may cause the processor 901 to execute processing such as addition, update, and deletion of data stored in the storage unit, in accordance with various programs.

The database refers to a relational database (RDB) and is for managing data sets, called tables or masters, which are structurally defined in a tabular format by rows and columns, in association with each other. In the database, a table is called a table or a master, a column in a table is called a column, and a row in a table is called a record. In a relational database (RDB), relationships between tables or masters may be set and associated with each other.

Typically, each table or each master has a column set as a main key for uniquely identifying a record. However, it is not necessarily required to set a main key for a column. The control unit may cause the processor 901 to execute addition, deletion, and update of a record with respect to a specific table or master stored in the storage unit, in accordance with various programs.

In addition, by causing the storage unit to store data, various programs, and various databases, the information processing device and the information processing system according to the present disclosure can be regarded as having been manufactured.

Note that the database and the master in the present disclosure may include any data structure (a list, a dictionary, an associative array, an object, or the like) in which information is structurally defined. It is assumed that the data structure also includes data that can be regarded as a data structure by combining data with functions, classes, methods, or the like described in any programming language.

The communication unit is implemented by the communication IF 991. The communication unit implements the function of communicating with other computers 90 via a network. The communication unit may receive information transmitted from another computer 90 and input it into the control unit. The control unit may cause the processor 901 to execute information processing on the received information, in accordance with various programs. Additionally, the communication unit may transmit information output from the control unit to another computer 90.

### <Additional Notes>

The matters described in each of the above embodiments are additionally described below.

### (Note 1)

A wireless power supply system including: a plurality of transmitters, a plurality of receivers, and a control device configured to control the plurality of transmitters, in which the plurality of transmitters (100) are configured to wirelessly supply power to the plurality of receivers (200), the control device (C10) is configured to control the plurality of transmitters not to transmit radio waves over a second period for each first period, and the control device (C10) is configured to execute carrier sense control in a space where the plurality of transmitters and the plurality of receivers are arranged, during the second period.

In the wireless power supply system including the plurality of transmitters and the plurality of receivers, carrier sense control can be appropriately executed. Accordingly, the influence of the radio waves transmitted by each of the transmitters and the receivers on other wireless devices can be suppressed.

### (Note 2)

In Note 1, the control device (C10) is configured to control the plurality of transmitters via a wired connection.

Accordingly, the radio wave transmission by the transceiver can be controlled without being influenced by other wireless devices.

### (Note 3)

In Note 1, the control device (C10) is configured to control the plurality of transmitters via a wireless connection.

Accordingly, even for a transceiver arranged at a position where wired connection is difficult, the radio wave transmission by the transceiver can be controlled.

### (Note 4)

In any one of Notes 1 to 3, the control device (C10) is configured to dynamically control at least one of the first period and the second period based on a result of the carrier sense control.

Accordingly, the radio wave transmission by the transceiver can be flexibly controlled in accordance with the result of the carrier sense control.

### (Note 5)

In any one of Notes 1 to 4, the control device (C10) is configured to execute carrier sense control to determine whether another wireless device is transmitting a radio wave in a frequency band that may interfere with a frequency band of radio waves output by the transmitters.

Accordingly, the wireless power supply system capable of determining whether another wireless device is present in the space can be provided.

### (Note 6)

In any one of Notes 1 to 5, the control device (C10) is configured to execute a radio wave stop step (S106, S302) of, when sensing through the carrier sense control that another wireless device in operation is present in the space, controlling the plurality of transmitters not to transmit radio waves at least for a period during which a wireless device is in operation.

Accordingly, the wireless power supply system capable of suppressing radio wave interference with other wireless devices present in the space can be provided.

### (Note 7)

In the Note 6, the control device (C10) is configured to execute a resumption presentation step (S107) of presenting, to a predetermined administrator, information indicating that the plurality of transmitters are to be controlled to transmit radio waves, a resumption approval step (S108) of accepting an approval operation from the predetermined administrator to approve controlling the plurality of transmitters to transmit radio waves, according to the resumption presentation step, a radio wave resumption step (S109) of transmitting radio waves for supplying power from the plurality transmitters to the plurality of receivers, according to the approval operation accepted in the resumption approval step, a stop presentation step (S104) of presenting, to the predetermined administrator, information indicating that the plurality of transmitters are to be controlled not to transmit radio waves, prior to the radio wave stop step, and a stop approval step (S105) of accepting an approval operation from the predetermined administrator to approve controlling the plurality of transmitters not to transmit radio waves, according to the stop presentation step, and the radio wave stop step (S106) is a step of controlling the plurality of transmitters not to transmit radio waves, according to the approval operation accepted in the stop approval step.

Accordingly, when the radio wave transmission by the transceiver is stopped or resumed, a notification is made to the administrator of the wireless power supply system, and the stopping or resuming can be made in response to approval of the notification. The wireless power supply system can be controlled in accordance with an instruction from the predetermined administrator, based on laws, regulations, and the like.

### (Note 8)

In Note 1, the control device (C10) is configured to execute a device acquisition step (S103) of acquiring information on another wireless device in the space, and a radio wave stop step (S106) of controlling the plurality of transmitters not to transmit radio waves, based on the information on the wireless device acquired in the device acquisition step.

Accordingly, the wireless power supply system capable of suppressing radio wave interference with other wireless devices present in the space can be provided.

### (Note 9)

In Note 8, the device acquisition step (S103) is a step of acquiring information on a location, a frequency band, and an operation period of the wireless device, and the radio wave stop step (S106) is a step of controlling the plurality of transmitters not to transmit radio waves such that radio waves for power supply transmitted by the plurality of transmitters do not interfere with a radio wave transmitted by the wireless device, based on the location, frequency band, and operation period of the wireless device.

Accordingly, the wireless power supply system capable of wirelessly supplying power while suppressing radio wave interference with other wireless devices present in the space can be provided.

### (Note 10)

In Note 8 or 9, the control device (C10) is configured to execute a device storage step (S101) of storing the information on the wireless device, and a device acceptance step (S102) of accepting, from a user, an input operation of the information on the wireless device stored in the device storage step, and the device acquisition step (S103) is a step of acquiring the information on the wireless device accepted in the device acceptance step.

Accordingly, the wireless power supply system capable of suppressing, based on the user input, radio wave interference with other wireless devices present in the space can be provided.

### (Note 11)

In any one of Notes 8 to 10, the control device (C10) is configured to, after a predetermined period has elapsed from the radio wave stop step, execute a determination step (S109, S303) of determining that the wireless device is not in operation, based on the information on the wireless device acquired in the device acquisition step, and a radio wave resumption step (S109, S303) of, when it is determined in the determination step that the wireless device is not in operation, transmitting radio waves for supplying power from the plurality of transmitters to the plurality of receivers.

As a result, even when the transmitter has stopped transmission of radio waves so as to suppress the influence on other wireless devices, the transmitter can resume wireless power supply while suppressing radio wave interference with the other wireless devices.

### (Note 12)

In Note 1, the control device (C10) is configured to execute a reservation acquisition step (S301) of acquiring reservation information on scheduled use of a wireless device present in the space, and a radio wave stop step (S302) of controlling the plurality of transmitters not to transmit radio waves such that radio waves for supplying power from the plurality of transmitters to the plurality of receivers do not interfere with a radio wave transmitted by the wireless device, based on the reservation information acquired in the reservation acquisition step.

Accordingly, the wireless power supply system capable of suppressing radio wave interference with other wireless devices present in the space can be provided.

### (Note 13)

In Note 12, the radio wave stop step (S302) is a step of specifying a frequency band and an operation period of the wireless device based on contents of the scheduled use of the space included in the reservation information acquired in the reservation acquisition step, and controlling the plurality of transmitters not to transmit radio waves so that the radio waves for supplying power from the plurality of transmitters to the plurality of receivers do not interfere with the radio wave transmitted by the wireless device.

Accordingly, the wireless power supply system capable of suppressing radio wave interference with other wireless devices present in the space can be provided.

### (Note 14)

A system including a first wireless power supply system in any one of Notes 1 to 3 and a second wireless power supply system in any one of Notes 1 to 3, in which a plurality of first transmitters included in the first wireless power supply system and a plurality of second transmitters included in the second wireless power supply system are configured to control the first transmitters and the second transmitters not to transmit radio waves over a third period.

Accordingly, even when a plurality of different wireless power supply systems are present in a space, the influence of the radio waves transmitted by each of the transmitters and the receivers on other wireless devices can be suppressed.

### (Note 15)

A transmitter configured to execute carrier sense control in the wireless power supply system in any one of Notes 1 to 13.

In a wireless power supply system including a plurality of transmitters and a plurality of receivers, the influence of radio waves transmitted by each of the transmitters and the receivers on other wireless devices can be suppressed.

### REFERENCE SIGNS LIST

1: WPT system, 300: first information processing device, 3001: storage unit, 3004: control unit, 3006: input device, 3008: output device, 400: second information processing device, 4001: storage unit, 4004: control unit, 4006: input device, 4008: output device, C 10: control device, C101: storage unit, C104: control unit, C106: input device, C108: output device, 100: transmitter, 200: receiver

## Claims

1. A wireless power supply system comprising:
a plurality of transmitters;
a plurality of receivers; and
a control device configured to control the plurality of transmitters,
wherein the plurality of transmitters are configured to wirelessly supply power to the plurality of receivers,
the control device is configured to control the plurality of transmitters not to transmit radio waves over a second period for each first period,
the control device is configured to execute carrier sense control in a space where the plurality of transmitters and the plurality of receivers are arranged, during the second period, and
the control device is configured to, in a case where it is detected, by at least one transmitter included in the plurality of transmitters or by the control device, that another wireless device in operation is present in the space, execute a radio wave stop step of controlling the plurality of transmitters not to transmit radio waves at least for a period during which the wireless device is in operation.

2. A wireless power supply system comprising:
a plurality of transmitters;
a plurality of receivers; and
a control device configured to control the plurality of transmitters,
wherein the plurality of transmitters are configured to wirelessly supply power to the plurality of receivers,
the control device is configured to control the plurality of transmitters not to transmit radio waves over a second period for each first period,
the control device is configured to execute carrier sense control in a space where the plurality of transmitters and the plurality of receivers are arranged, during the second period, and
the control device is configured to execute:
a resumption presentation step of presenting, to a predetermined administrator, information indicating that the plurality of transmitters are to be controlled to transmit radio waves;
a resumption approval step of accepting, from the predetermined administrator, an approval operation to approve controlling the plurality of transmitters to transmit radio waves, according to the resumption presentation step;
a radio wave resumption step of transmitting radio waves for supplying power from the plurality transmitters to the plurality of receivers, according to the approval operation accepted in the resumption approval step;
a radio wave stop step of, when sensing through the carrier sense control that another wireless device in operation is present in the space, controlling the plurality of transmitters not to transmit radio waves at least for a period during which the wireless device is in operation;
a stop presentation step of presenting, to the predetermined administrator, information indicating that the plurality of transmitters are to be controlled not to transmit radio waves, prior to the radio wave stop step; and
a stop approval step of accepting, from the predetermined administrator, an approval operation to approve controlling the plurality of transmitters not to transmit radio waves, according to the stop presentation step, and
the radio wave stop step is a step of controlling the plurality of transmitters not to transmit radio waves, according to the approval operation accepted in the stop approval step.

3. A wireless power supply system comprising:
a plurality of transmitters;
a plurality of receivers; and
a control device configured to control the plurality of transmitters,
wherein the plurality of transmitters are configured to wirelessly supply power to the plurality of receivers,
the control device is configured to control the plurality of transmitters not to transmit radio waves over a second period for each first period,
the control device is configured to execute carrier sense control in a space where the plurality of transmitters and the plurality of receivers are arranged, during the second period, and
the control device executes:
a device acquisition step of acquiring information on another wireless device in the space; and
a radio wave stop step of controlling the plurality of transmitters not to transmit radio waves, based on the information on the wireless device acquired in the device acquisition step.

4. The wireless power supply system according to claim 3,
wherein the device acquisition step is a step of acquiring information on a location, a frequency band, and an operation period of the wireless device, and
the radio wave stop step is a step of controlling the plurality of transmitters not to transmit radio waves such that radio waves for power supply transmitted by the plurality of transmitters do not interfere with a radio wave transmitted by the wireless device, based on the location, frequency band, and operation period of the wireless device.

5. The wireless power supply system according to claim 3 or 4, wherein the control device executes:
a device storage step of storing the information on the wireless device; and
a device acceptance step of accepting, from a user, an input operation of the information on the wireless device stored in the device storage step, and
the device acquisition step is a step of acquiring the information on the wireless device accepted in the device acceptance step.

6. The wireless power supply system according to any one of claims 3 to 5,
wherein the control device executes:
after a predetermined period has elapsed from the radio wave stop step, a determination step of determining that the wireless device is not in operation, based on the information on the wireless device acquired in the device acquisition step; and
a radio wave resumption step of, in a case where it is determined in the determination step that the wireless device is not in operation, transmitting radio waves for supplying power from the plurality of transmitters to the plurality of receivers.

7. A wireless power supply system comprising:
a plurality of transmitters;
a plurality of receivers; and
a control device configured to control the plurality of transmitters,
wherein the plurality of transmitters are configured to wirelessly supply power to the plurality of receivers,
the control device is configured to control the plurality of transmitters not to transmit radio waves over a second period for each first period,
the control device is configured to execute carrier sense control in a space where the plurality of transmitters and the plurality of receivers are arranged, during the second period, and
the control device executes:
a reservation acquisition step of acquiring reservation information on scheduled use of a wireless device present in the space; and
a radio wave stop step of controlling the plurality of transmitters not to transmit radio waves such that radio waves for supplying power from the plurality of transmitters to the plurality of receivers do not interfere with a radio wave transmitted by the wireless device, based on the reservation information acquired in the reservation acquisition step.

8. The wireless power supply system according to claim 7,
wherein the radio wave stop step is a step of specifying a frequency band and an operation period of the wireless device based on contents of the scheduled use of the space included in the reservation information acquired in the reservation acquisition step, and of controlling the plurality of transmitters not to transmit radio waves to avoid interference between radio waves for supplying power from the plurality of transmitters to the plurality of receivers and the radio wave transmitted by the wireless device.

9. The wireless power supply system according to any one of claims 1 to 8,
wherein the control device is configured to control the plurality of transmitters via a wired connection.

10. The wireless power supply system according to any one of claims 1 to 8,
wherein the control device is configured to control the plurality of transmitters via a wireless connection.

11. The wireless power supply system according to any one of claims 1 to 8,
wherein the control device is configured to dynamically control at least one of the first period and the second period, based on a result of the carrier sense control.

12. The wireless power supply system according to any one of claims 1 to 8,
wherein the control device is configured to execute the carrier sense control to determine whether another wireless device is transmitting a radio wave in a frequency band that may interfere with a frequency band of radio waves output by the transmitters.

13. A system comprising:
a first wireless power supply system according to any one of claims 1 to 8; and
a second wireless power supply system according to any one of claims 1 to 8,
wherein a plurality of first transmitters included in the first wireless power supply system and a plurality of second transmitters included in the second wireless power supply system are configured to control the first transmitters and the second transmitters not to transmit radio waves over a third period.

14. A transmitter configured to execute the carrier sense control in the wireless power supply system according to any one of claims 1 to 8.
